# EUROPÄISCHE PATENTSCHRIFT

(11) **EP 4 035 861 B1**
(45) Veröffentlichungstag und Bekanntmachung des Hinweises auf die Patenterteilung: **07.08.2024**
(21) Anmeldenummer: 22154324.2
(22) Anmeldetag: 31.01.2022
(51) Int. Cl.: B29B 17/04, B09B 3/35, B29B 17/02, B29B 17/00

(54) **VERFAHREN ZUM RECYCELN EINES MEHRLAGIGEN PANEELS**
METHOD FOR RECYCLING A MULTILAYER PANEL
PROCÉDÉ DE RECYCLAGE D'UN PANNEAU MULTICOUCHE

(30) Priorität: 29.01.2021 DE 102021102097
(43) Veröffentlichungstag der Anmeldung: 03.08.2022
(73) Patentinhaber: MeisterWerke Schulte GmbH, 59602 Rüthen-Meiste (DE)
(72) Erfinder: SCHULTE, Giudo, 59602 Rüthen (DE)
(74) Vertreter: Griepenstroh, Jörg

(56) Entgegenhaltungen:
- DE-A1- 102009 026 684
- DE-A1- 102014 211 776
- DE-C1- 10 004 292
- JP-A- 2005 186 582
- US-A1- 2006 157 190
- US-A1- 2017 275 476

## Beschreibung

Die Erfindung betrifft ein Verfahren zum Recyceln eines mehrlagigen Paneels mit einer Tragschicht aus einem Holzwerkstoff gemäß den Merkmalen des Patentanspruchs 1.

Laminatböden und Multilayerböden, aber auch Fertigparkett, wird in der Regel schwimmend verlegt. Das Produkt wird dabei nur lose auf dem Unterboden aufliegend verlegt. Diese Vorgehensweise ermöglicht eine völlig unkomplizierte und geräuschlose Aufnahme der Altbeläge in Form von ganzen Dielen. In der Regel werden die Produkte leimfrei verlegt. Sie werden über Klickverbindungen gegeneinander arretiert. Demzufolge können sie auch einfach wieder auseinander geklickt werden. Ganze Dielen können folglich auch einfach gestapelt werden, da ja keine Einzelteile mühsam von Estrich abgeschält oder herausgebrochen werden müssen.

Derartige Bodensysteme haben in der Regel eine Deckschicht, die als Nutz- und Verschleißschicht bzw. Dekorschicht dient. Die Deckschicht wird auf einer Tragschicht befestigt. Die Tragschicht oder auch die Trägerplatte besteht in der Regel aus einem Holzwerkstoff (HDF), z.B. aus einer hochdichten Faserplatte. Faserplatten werden nach dem Trockenverfahren unter Zusatz eines synthetischen Bindemittels hergestellt. Die Faserplatten werden hinsichtlich ihrer Dichte unterschieden. Hochdichte Faserplatten (HDF) haben eine Dichte von über 800 kg/m³. Leichte mitteldichte Faserplatten (L-MDF) haben eine Dichte von unter 650 kg/m³ und ultraleichte mitteldichte Faserplatten (UL-MDF) haben eine Dichte von unter 550 kg/m³. Durch Änderung der Zusammensetzung des synthetischen Bindemittels oder durch Zugabe anderer Zusätze können die Eigenschaften der Faserplatten, z.B. Feuerschutz, Resistenz gegen biologischen Befall etc. beeinflusst werden. Für Fußbodenpaneele kommen in der Regel hochdichte Faserplatten zur Anwendung.

Auf der Rückseite des Paneels kann zusätzlich eine Unterschicht angeordnet sein. Diese dient in der Regel als Gegenzug.

Paneele kommen auch als Wand- oder Deckenbeläge zum Einsatz. In der Regel handelt es sich um folienummantelte MDF-Produkte.

HDF-Platten sind feuchteempfindlich. Bei Lagerung im Wasser, insbesondere im warmen, heißen Wasser quellen die Holzfasern auf und können wieder aufgeschlossen werden. Je kleiner die Abschnitte der HDF-Platten sind, desto größer ist die Oberfläche und desto einfacher kann das Wasser mit den Fasern in Kontakt kommen. In der WO 2011 077 155 A1 wird z.B. ein Recyclingverfahren beschrieben, bei welchem die Platten geschreddert und anschließen in Wasser gelöst werden, um die Fasern zu gewinnen.

Üblicherweise werden Paneele dieser Bauarten komplett zerkleinert bzw. fein zerteilt und in der Regel verbrannt. Wenn überhaupt ein Recycling in Frage kommt, stören die Anhaftungen der Deckschicht und der Unterschicht. Das zu recycelnde Produkt ist nicht sortenrein und kann daher als Wertstoff nur begrenzt wiederverwendet werden.

Die US 2017/275476 A1 offenbart ein Verfahren, bei welchem Fußbodenbeläge aus Holz nach der Abnutzung oder Beschädigung abgezogen bzw. abgeschält werden.

Dies kann mit Schneidwerkzeugen auch in mehreren Teilabschnitten erfolgen. Anschließend steht das Substrat für eine erneute Beschichtung zur Verfügung.

Die US 2006/0157190 A1 offenbart Paneele, die eine Deckschicht und eine Unterschicht aufweisen, die jeweils mit einer zentralen Tragschicht verbunden sind. Die Unterschicht wird durch ein mechanisches Trennverfahren von der Tragschicht getrennt, indem das Paneel erwärmt wird und eine äußere Schicht durch Saugmittel fixiert und von der Tragschicht gelöst wird.

Die DE 10 2009 026 684 A1 offenbart ein Verfahren und eine Vorrichtung zur Delamination von Schichtkörpern aus mindestens zwei starren Körpern, wie z.B. Glasscheiben und mindestens einer Klebeschicht unter unzerstörter Rückgewinnung der starren Körper. Um die Schichten zu trennen, wird eine Klebeschicht aus weichmacherhaltigem Polyvinylacetat durch Erwärmen über die Erweichungstemperatur nachgiebig gemacht, so dass der starre Körper anschließend durch Vorschub von dem anderen starren Körper abscheren kann.

Die DE 10 2014 211 776 A1 offenbart ein Verfahren zur Vorrichtung zur Bearbeitung von Kühl- und/oder Klimageräten, die recycelt werden sollen. Zu Beginn des Prozesses werden die Kühl- und/oder Klimageräte in einem Erkennungsschritt erfasst, wobei festgestellt werden soll, ob das betreffende Kühl- und/oder Klimagerät ein FCKW-freies Kältemittel oder ein halogenfreies Kältemittel enthält. Die Erkennung kann eine optische Erkennung eines Typenschildes umfassen.

Die JP 2005 186582 A offenbart ein Verfahren zum Recyceln von Holzplatten. Es wird vorgeschlagen, die Holzplatten zum Recyceln zu zerkleinern und Nicht-Holzanteile von den Holzanteilen zu trennen.

Die DE 100 04 292 C1 offenbart ein Verfahren zum Wiederverwerten eines mit einer Kunststoffbeschichtung versehenen Holzes, indem die Kunststoffbeschichtung in Kontakt mit einem kryogenen Werkstoff gebracht wird. Die Kunststoffbeschichtung wird auf diese Art und Weise versprödet und soll mechanisch vom Holz getrennt werden, damit das Holz einer weiteren Verwendung zugeführt werden kann.

Der Erfindung liegt die Aufgabe zugrunde, ein Verfahren zum Recyceln eines mehrlagigen Paneels aufzuzeigen, das eine Tragschicht aus einem Holzwerkstoff und wenigstens eine Deckschicht aufweist, wobei die Tragschicht möglichst sortenrein dem Recyclingprozess zugeführt werden soll.

Diese Aufgabe wird durch ein Verfahren mit den Merkmalen des Patentanspruchs 1 gelöst.

Die Unteransprüche betreffen vorteilhafte Weiterbildungen der Erfindung.

Das erfindungsgemäße Verfahren sieht vor, dass die Deckschicht durch ein mechanisches Trennverfahren von der Tragschicht getrennt wird, so dass die Form der Tragschicht erhalten bleibt und einem Recyclingprozess zur Wiederverwertung der Tragschicht zugeführt wird.

In Abkehr von den bekannten Lösungen, bei denen die Paneele anfangs komplett geschreddert werden und erst in nachfolgenden Prozessschritten die Elemente der Tragschicht aufwendig von übrigen Komponenten, insbesondere der Deckschicht und dem Gegenzug, getrennt werden, sieht die Erfindung vor, dass die Deckschicht zunächst von der Tragschicht getrennt wird, und zwar durch ein mechanisches Trennverfahren.

Tragschichten aus einem Holzwerkstoff umfassen insbesondere Holzwerkstoffplatten. Zur Herstellung von Holzwerkstoffplatten werden Furnierhölzer, Holzspäne oder Holzfasern miteinander verklebt und verpresst. Hierunter werden sowohl Lagenwerkstoffe, wie Sperrholz oder Schichtplatten, Spanwerkstoffe, Faserwerkstoffe, Holzwerkstoffplatten aus Vollholz verstanden. Alle beschriebenen Holzwerkstoffe sind organisch gebunden. Der Begriff Holzwerkstoff umfasst auch Tragplatten aus Vollholz.

Laminatböden oder auch Multilayerböden sind relativ starr. Die zu verarbeitenden Paneele wurden insbesondere bereits verbaut, d.h. sie werden zum Recyceln zunächst aufgenommen, d.h. ausgebaut.

Sie können sauber ausgebaut und auch als ganze Diele aufgestapelt und zum Recyclingort, an dem das besagte Verfahren durchgeführt wird, transportiert werden. Die einzelnen Paneele können in relativ einfach gestalteten Vorrichtungen mechanisch bearbeitet werden, um die Deckschicht von der Tragschicht zu trennen. Hierbei kann es sich um Fräsaggregate handeln, die mechanisch die Oberseite und, sofern auch eine Unterschicht vorhanden ist, auch die Unterseite von der Tragschicht trennen. Das Ergebnis ist eine von Anhaftungen befreite Tragschicht, insbesondere eine HDF-Platte, die als Ganzes zunächst erhalten bleibt, d.h. nicht zerstört wird. Die Tragschicht kann optional anschließend der weiteren Faseraufbereitung zugeführt werden kann, beispielsweise unter Verwendung von Quellmitteln. Die Erfindung bezieht sich auch auf Paneele für die Wand- oder Deckenverkleidung. Diese Paneele haben in der Regel eine Tragschicht aus HDF und eine Folienummantelung.

Es können diverse Aufschlussverfahren für die HDF-Platten zum Einsatz kommen, um die Holzfasern aus den HDF-Platten zu gewinnen, wobei die Holzfasern dann auch Neuprodukten in geeignetem Umfang zugesetzt werden können. Der wesentliche Unterschied gegenüber den umgekehrten Verfahren, bei denen zunächst die Platte insgesamt zerkleinert und anschließend ein Aufschlussverfahren durchgeführt wird, ist, dass die Holzfasern bei dem erfindungsgemäßen Verfahren nicht zusätzlich zerkleinert werden. Die tatsächliche Länge der Holzfasern hängt maßgeblich von dem sich anschließenden Aufbereitungsverfahren ab. Der Wichtigste Punkt ist allerdings, dass keine unlösbaren Bestandteile, insbesondere einer Melamin-Deckschicht oder eines Melamin-Gegenzuges oder sogar einer PVC-Deckschicht vorhanden sind und dass folglich für die weitere Aufbereitung auch keine Maßnahmen getroffen werden müssen, diese Stoffe gesondert herauszufiltern oder zu lösen.

Ein weiterer positiver Aspekt ist, dass aufwändige Untersuchungen und Laboranalysen bezüglich einer etwaigen Kontamination des Recyclingmaterials entfallen können.

Mechanische Trennverfahren im Sinne der Erfindung können sowohl für die Deckschicht als auch für die Unterschicht zum Einsatz kommen. Es kann sich hierbei um unterschiedliche Trennverfahren handeln. Bevorzugt kommen spanabhebende Verfahren zur Anwendung, entweder mit geometrisch bestimmter Schneide (Fräsen) oder mit geometrisch unbestimmter Schneide (Schleifen). Grundsätzlich eignen sich auch Schneidverfahren zum Trennen der Deckschicht bzw. der Unterschicht von der Tragschicht. Bei dem Schneidverfahren ist insbesondere das Keilschneiden zu nennen. Hierbei handelt es sich um ein Zerteilen, bei dem mit einer oder zwei keilförmigen Schneiden das Produkt entlang der Trennlinie getrennt wird. Es kann sich hierbei um feststehende Schneiden handeln, wobei das Paneel an den Schneiden entlang bewegt wird. Hierzu kann eine Vorrichtung zur Durchführung des Verfahrens geeignete Antriebsmittel für den Vorschub und die Führung des Paneels aufweisen.

Vorzugsweise werden die Deckschicht und die Unterschicht in einem einzigen Arbeitsdurchgang von der Tragschicht getrennt. Dies kann dadurch erfolgen, dass oberseitig und unterseitig jeweils mindestens eine Fräswalze gleichzeitig mit den beiden Seiten des Paneels in Eingriff gelangt. Selbstverständlich ist es auch möglich, zunächst eine Deckschicht zu entfernen und bei einem weiteren Durchgang mittels derselben Fräswalze auch die Unterschicht zu entfernen.

Es wird als besonders vorteilhaft angesehen, wenn die Deckschicht und die Unterschicht getrennten Materialkreisläufen zugeführt werden. Die Deckschicht besteht in der Regel aus anderen Werkstoffen als die Unterschicht. Durch getrennte Materialkreisläufe lässt sich das Recycling der einzelnen Komponenten der Deckschicht bzw. der Unterschicht besser steuern.

Bei Laminat- und Multilayerböden auf Holzwerkstoffbasis sind die Oberschicht und die Unterschicht relativ dünn im Verhältnis zur Trägerplatte bzw. Tragschicht. Die Tragschicht besteht zu etwa 90% aus Holzfasern, die bevorzugt auch aus nachhaltig bewirtschafteten Wäldern stammen. Es handelt sich um einen wertvollen Rohstoff. Bei einem 8 mm Laminatboden entfallen auf die Deckschicht und den sogenannten Gegenzug maximal 1 mm bzw. gewichtsmäßig maximal nur 15%.

Das erfindungsgemäße Verfahren ist ein wesentlicher Beitrag im Hinblick auf die Nachhaltigkeit und stoffliche Verwertung von Rohstoffen. Altpaneele bzw. Altdielen besitzen typische Abmessungen von 140 - 300 mm Breite bei 800 - 2000 mm Länge. Der Anteil des wertvollen Werkstoffes Holz ist mit ca. 90% sehr hoch und kann mit dem erfindungsgemäßen Verfahren nahezu vollständig wieder in den Produktionskreislauf zurückgeführt werden. Die auf diese Weise erhaltene MDF- bzw. HDF-Platte ist im Sinne der Erfindung sortenrein, d.h. frei von Anhaftungen, und steht als Wertstoff für weitere Verwendungsmöglichkeiten zur Verfügung.

In einer vorteilhaften Weiterbildung der Erfindung ist vorgesehen, dass die Paneele eine Kennzeichnung an ihrer Unterseite besitzen, wobei die Kennzeichnung erfindungsgemäß ausgelesen wird, um eine Information über den Typ des Paneels mit einer Datenbank abzugleichen, die Verfahrensparameter für das Trennverfahren bereitstellt. Die Kennzeichnung kann Informationen über die verwendeten Werkstoffe der Deckschicht, der Unterschicht oder über die verwendeten Harze beinhalten, mit denen die Holzfasern miteinander verbunden sind sowie Informationen über die Geometrie dieser Paneele. Aufgrund dieser Informationen ist es möglich, die Einstellungen von Trennwerkzeugen, insbesondere die Position relativ zu dem Paneel anzupassen, damit nicht zu viel und nicht zu wenig Material im Bereich der Deckschicht bzw. der Unterschicht entfernt wird.

Die Kennzeichnung kann aber auch dazu verwendet werden, bestimmte Paneele, die aus bestimmten Gründen einem Recycling nicht zugeführt werden sollen, auszusortieren. Durch die Kennzeichnung kann auch erkannt werden, für welches Trennverfahren sich das Paneel am besten eignet. Sollte eine erfindungsgemäße Vorrichtung mehrere Trennstationen aufweisen, die nach unterschiedlichen Trennverfahren arbeiten bzw. unterschiedliche Trennmittel aufweisen, kann das Paneel der geeigneten Trennstation auf Basis der Information aus der Kennzeichnung zugeleitet werden. Dies kann beispielsweise auch eine Vorsortierung hinsichtlich Länge oder Breite der Paneele sein oder auch hinsichtlich der chemischen Zusammensetzung der Plattenbindemittel oder hinsichtlich der Dicken der Deckschicht und/oder der Unterschicht.

In einer Weiterbildung der Erfindung ist vorgesehen, dass das Paneel vor dem Trennen der Deckschicht und/oder der Unterschicht in Längsstreifen geteilt wird. Der eigentliche Trennvorgang der Deckschicht und/oder der Unterschicht von der Tragschicht erfolgt, indem die Streifen bearbeitet werden. Die Einteilung in Streifen hat den Vorteil, dass insbesondere bei der Verwendung von Fräsmitteln kostengünstigere, schmalere Werkzeuge verwendet werden können. Auch die Führung der Paneele innerhalb der Anlage ist einfacher, wenn alle Streifen die gleiche Breite haben bzw. eine maximale Breite nicht überschreiten.

Das Einteilen in Streifen kann auch dazu verwendet werden, Randbereiche von dem Paneel abzutrennen, insbesondere Randbereiche, in denen Nut und/oder Feder angeordnet sind. Je nach Trennverfahren werden im Trennbereich Kräfte auf die Tragschicht ausgeübt, denen eine Nut nicht standhalten kann und gegebenenfalls wegbrechen würde. Daher wird insbesondere der Nutbereich vor dem Trennvorgang von dem Paneel abgeschnitten. Mengenmäßig spielt dieser Bereich eine untergeordnete Rolle. Es ist erfindungsgemäß auch möglich, die Anfangs- und Endbereiche des Paneels, die in der Regel auch Nut und Feder aufweisen, abzutrennen, so dass die fertigen, im Wesentlichen sortenreinen Tragschichten einheitliche Abmessungen sowohl hinsichtlich Länge und Breite haben, was das Recycling in nachfolgenden Prozessen aufgrund einer standardisierten Größe nochmals vereinfacht.

Die Streifen können nach dem Entfernen der Deckschicht und der Unterschicht mit einer Kennzeichnung versehen werden, um diese sortenrein sortierten Streifen als Rohstoff dann gezielt einer Faseraufbereitung zuzuführen. Die Kennzeichnungskette wird bis hin zur Faseraufbereitung fortgesetzt und wird durch das Abtragen anhaftender Schichten nicht unterbrochen.

Durch einen Beschnitt der Kanten oder Besäumungsbeschnitte im Bereich von Nuten und Federn entfallen auch etwaige Kontaminationen durch Kantenimprägnierungen der Fertigprodukte sowie Kontaminationen durch Gleitmittel im Verbindungbereich von Nut und Feder oder Kontaminationen durch Anti-Knarr-Beschichtungen oder sogar durch integrierte Verbindungmittel aus Kunststoff etc.

HDF- und MDF-Platten werden mit klar definierten Bindemitteln und Rezepturen nahezu weltweit einheitlich hergestellt und das schon über mehr als 25 Jahre. Daher wird mit dem erfindungsgemäßen Verfahren ein hinsichtlich der Zusammensetzung ein weitestgehend standardisiertes Produkt bereitgestellt. Insbesondere besitzt die von den anderen Schichten separierte und zugeschnittene Tragschicht einheitliche Abmessungen ohne Bruchstücke und Abschnitte, bei denen die Länger kleiner ist als die Breite. Die Breite der einzelnen Streifen beträgt vorzugsweise mindestens 15 cm.

Die Erfindung stellt in standardisierter Form den Rohstoff für vielfältige Faseraufbereitungsmethoden zur Verfügung. Recycelbare Paneele stehen in extrem großer Menge zur Verfügung. Zum Beispiel werden in Europa jährlich ca. 350 Mio. qm Laminatboden produziert. Hinzu kommen weitere Mengen für Multilayer-Designböden mit Faserplatten und Wandpanelle mit MDF.

Die Erfindung wird nachfolgend anhand von in rein schematischen Zeichnungen dargestellten Ausführungsbeispielen erläutert. Es zeigen:
- Figur 1: einen Querschnitt durch eine erste Bearbeitungsstation zur Durchführung des Verfahrens;
- Figur 2: einen Querschnitt durch eine zweite Bearbeitungsstation zur Durchführung des Verfahrens und
- Figur 3: eine schematische Darstellung einer Bearbeitungsstation zur Durchführung des Verfahrens in der Draufsicht.

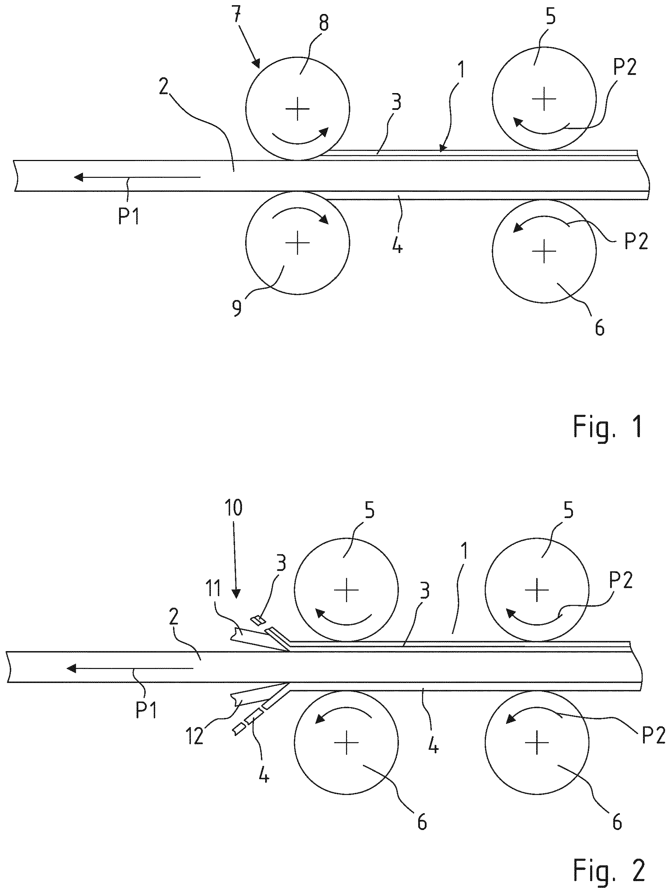

Die Figur 1 zeigt einen Längenabschnitt eines mehrlagigen Paneels 1 mit einer Tragschicht 2, die den Kern des Paneels 1 bildet. Die Tragschicht 2 besteht aus einer hochdichten Faserplatte auf Holzbasis mit einem Holzanteil von 90%. In der Bildebene oben befindet sich die Sichtseite des Paneels 1. Hier befindet sich eine zweilagige Deckschicht 3. Auf der gegenüberliegenden Seite der Tragschicht 2 befindet sich unterseitig eine Unterschicht 4, die fachüblich als Gegenzug bezeichnet wird. Es handelt sich um ein Paneel eines Laminatbodens. Es sind nicht nur Melamin-Gegenzüge weit verbreitet, sondern auch beispielsweise ab Werk kaschierte Trittschallmaterialien, wie z.B. Kork oder PUR. All diese Werkstoffe bzw. Funktionsschichten werden als Unterschicht verstanden.

Das Paneel 1 wird in Richtung des Pfeils P1 transportiert, indem es von einer Antriebsrolle 5 bewegt wird. Die gegenüberliegende Stützrolle 6, die mit der Unterschicht 4 in Kontakt steht, dient zur Abstützung. Optional können auch beide Rollen angetrieben werden. Der Pfeil P2 verdeutlicht die jeweilige Drehrichtung der Antriebsrolle 5 bzw. der Stützrolle 6. Die Geschwindigkeit der Antriebsrolle 5 bzw. der Stützrolle 6 bestimmt die Vorschubgeschwindigkeit des Paneels 1 in Richtung des Pfeils P1.

Das Paneel 1 wird einer Trennstation 7 zugeführt. Mittels der Trennstation 7 wird ein mechanisches Trennverfahren durchgeführt. In diesem Fall handelt es sich um ein spanabhebendes Verfahren mit geometrisch bestimmter Schneide. Es kommen zwei Fräswalzen 8, 9 zum Einsatz, die einen gegenseitigen Abstand haben, der so groß ist, dass nur das Material der Deckschicht 3 und das Material der Unterschicht 4 abgetragen wird. Es verbleibt die von Anhaftungen befreite Tragschicht 2, die in nicht näher dargestellter Weise dem weiteren Recycling zugeführt werden kann, insbesondere um die Holzfasern in der Tragschicht 2 aufzuschließen, beispielsweise durch ein quellendes Verfahren. Die so gewonnenen Holzfasern können z. B. zur Herstellung weiterer Faserplatten verwendet werden.

In der Regel besteht der Gegenzug, d. h. die Unterschicht 4, aus vollkommen anderen Materialien als die Deckschicht 3. In nicht näher dargestellter Weise wird daher das abgetragene Material der Deckschicht 3 bzw. das abgetragene Material der Unterschicht 4 getrennt voneinander aus dem Trennprozess ausgeschleust, so dass es nicht zu einer Durchmischung der Werkstoffe kommt.

Die Ausführungsform der Figur 2 zeigt eine Alternative für das Recycling des mehrlagigen Paneels 1. Die dortige Trennstation 7 verwendet keine Fräswalzen wie bei dem Ausführungsbeispiel der Figur 1, sondern basiert auf einem Schneidverfahren. Die Trennstation 10 weist daher zwei Keilschneiden 11, 12 auf, die so positioniert sind, dass das in die Richtung des Pfeils P1 bewegte Paneel 1 an den feststehenden Keilschneiden 11, 12 vorbeigeführt wird, so dass die Unterschicht 4 und die Deckschicht 3 von der Tragschicht 2 getrennt bzw. abgeschnitten werden.

Sowohl bei dem Ausführungsbeispiel der Figur 1 als auch bei dem Ausführungsbeispiel der Figur 2 bleibt die Tragschicht 2 in ihrer geometrischen Form erhalten, wird also nicht geschreddert oder in anderer Art und Weise zerkleinert, während die Deckschicht 3 und die Tragschicht 4 entfernt werden.

Für das Keilschneiden gemäß Figur 2 ist eine exakte Führung des Paneels 1 sehr wichtig. Daher sind bei diesem Ausführungsbeispiel rein exemplarisch zwei Antriebsrollen 5 im Bereich der Oberseite des Paneels 1 angeordnet und gegenüberliegend zwei Stützrollen 6.

Die Darstellung der Figuren 1 und 2 sind stark schematisiert. Bei den Stützrollen 6 und Antriebsrollen 5 kann es sich entsprechend der Breite der Paneele auch um breitere Antriebswalzen handeln. Die Keilschneiden 11, 12 können auch oszillierend befestigt sein, um den Trennvorgang zu erleichtern. Die Keilschneiden sind im Abstand zueinander einstellbar und auch die Position und Winkellage der Keilschneiden ist einstellbar.

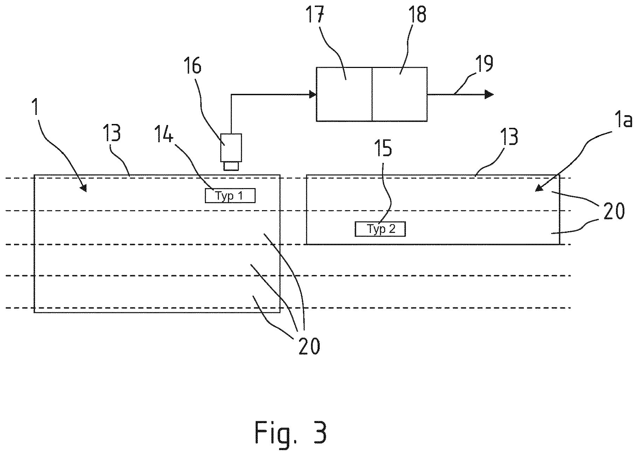

Figur 3 zeigt in der Draufsicht zwei Paneele 1, 1a unterschiedlicher Breiten. Die gestrichelten Linien sollen verdeutlichen, dass die Paneele 1, 1a vor dem Erreichen der Trennstation 7 bzw. 10 in einzelne Streifen 20 unterteilt werden. Die Schnittlinien sind so angeordnet, dass jeweils ein Randbereich 13 der Paneele 1, 1a abgetrennt wird. Hier kann sich beispielsweise eine Nut befinden, während sich an der gegenüberliegenden Seite eine Feder befindet.

Die beiden Paneele 1, 1a besitzen jeweils eine Kennzeichnung 14, 15 mit einer beispielhaften Information "Typ 1" bzw. "Typ 2". Anhand dieser Information lässt sich mittels einer Leseeinheit 16 auslesen, um welchen Typ von Paneel 1, 1a es sich handelt. Die ausgelesene Information wird an eine Datenverarbeitungseinheit 17 weitergeleitet, welche die Information mit Informationen aus einer Datenbank abgleicht, um zu prüfen, ob das Paneel 1, 1a für das Recycling grundsätzlich geeignet ist bzw. auch um geeignete Verfahrensparameter für die Trennstationen 7, 10 einzustellen. Eine Steuereinheit 18 gibt Steuersignale 19 für die jeweilige Trennstation 7, 10 aus, sowohl was die Zustellung der mechanischen Trennwerkzeuge z. B. der Fräswalzen 8, 9 betrifft als auch die Vorschubgeschwindigkeit, welche über die Antriebsrolle 5 gesteuert wird.

Die Paneele 1, 1a, die in einzelne Streifen 20 unterteilt wurden, werden streifenweise der jeweiligen Trennstation 7 zugeführt, so dass am Ende des Verfahrens MDF- bzw. HDF-Platten zur Verfügung stehen, die einheitliche Abmessungen ohne Bruchstücke haben, nicht durch Anhaftungen kontaminiert sind und in diesem Sinne als sortenreines Ausgangsprodukt weiteren Recyclingprozessen zur Verfügung gestellt werden können.

### Bezugszeichen:

- 1 -: Paneel
- 1a -: Paneel
- 2 -: Tragschicht
- 3 -: Deckschicht
- 4 -: Unterschicht
- 5 -: Antriebsrolle
- 6 -: Stützrolle
- 7 -: Trennstation
- 8 -: Fräswalze
- 9 -: Fräswalze
- 10 -: Trennstation
- 11 -: Keilschneide
- 12 -: Keilschneide
- 13 -: Randbereich von 1, 1a
- 14 -: Kennzeichnung von 1
- 15 -: Kennzeichnung von 1a
- 16 -: Ausleseeinheit
- 17 -: Datenverarbeitungseinheit
- 18 -: Steuereinheit
- 19 -: Steuersignal
- 20 -: Streifen von 1

- P1 -: Vorschubrichtung
- P2 -: Antriebsrichtung

## Patentansprüche

1. Verfahren zum Recyceln eines mehrlagigen Paneels (1, 1a), wobei das Paneel (1, 1a) eine Tragschicht (2) aus einem Holzwerkstoff und eine Deckschicht (3) aufweist, wobei die Deckschicht (3) durch ein mechanisches Trennverfahren von der Tragschicht (2) getrennt wird, wobei die Form der Tragschicht (2) erhalten bleibt und einem Recyclingprozess zur Wiederverwertung der Tragschicht (2) zugeführt wird, **dadurch gekennzeichnet, dass** das Paneel (1,1a) gegenüberliegend der Deckschicht (3) optional eine Unterschicht (4) aufweist, die mit der Tragschicht (2) verbunden ist, wobei das Paneel (1, 1a) vor dem Trennen der Deckschicht (3) und/oder der Unterschicht (4) in Längsstreifen (20) geteilt wird, wobei die Streifen (20) von der Deckschicht (3) und/oder der Unterschicht (4) getrennt werden.

2. Verfahren nach Anspruch 1, **dadurch gekennzeichnet, dass** die Unterschicht (4) durch ein mechanisches Trennverfahren von der Tragschicht (2) getrennt wird.

3. Verfahren nach Anspruch 1 oder 2, **dadurch gekennzeichnet, dass** die Deckschicht (3) und/oder oder Unterschicht (4) von der Tragschicht (2) spanabhebend mit geometrisch bestimmter oder geometrisch unbestimmter Schneide getrennt wird.

4. Verfahren nach einem der Ansprüche 1 bis 3, **dadurch gekennzeichnet, dass** die Deckschicht (3) und/oder die Unterschicht (4) durch ein Schneidverfahren von der Tragschicht (2) getrennt werden.

5. Verfahren nach einem der Ansprüche 2 bis 4, **dadurch gekennzeichnet, dass** die Deckschicht (3) und die Unterschicht (4) in einem einzigen Arbeitsdurchgang von den Tragschicht (2) getrennt werden.

6. Verfahren nach einem der Ansprüche 2 bis 5, **dadurch gekennzeichnet, dass** die Deckschicht (3) und die Unterschicht (4) getrennten Materialwegen zugeführt werden.

7. Verfahren nach einem der Ansprüche 1 bis 6, **dadurch gekennzeichnet, dass** die Paneele (1, 1a) eine Kennzeichnung (14, 15) an ihrer Unterseite haben, wobei die Kennzeichnung (14, 15) ausgelesen wird, um eine Information über den Typ des Paneels mit einer Datenbank abzugleichen, die Verfahrensparameter für das Trennverfahren bereitstellt.

## Claims

1. Method for recycling a multilayered panel (1, 1a), wherein the panel (1, 1a) has a base layer (2) made from a wood material and a top layer (3), wherein the top layer (3) is separated from the base layer (2) by a mechanical separation method, wherein the shape of the base layer (2) is retained and is fed to a recycling process for the recycling of the base layer (2), **characterized in that** the panel (1, 1a) optionally has a bottom layer (4) opposite the top layer (3), which bottom layer is joined to the base layer (2), wherein the panel (1, 1a) is divided into longitudinal strips (20) before separating the top layer (3) and/or the bottom layer (4), wherein the strips (20) are separated from the top layer (3) and/or the bottom layer (4).

2. Method according to claim 1, **characterized in that** the bottom layer (4) is separated from the base layer (2) by a mechanical separation method.

3. Method according to claim 1 or 2, **characterized in that** the top layer (3) and/or bottom layer (4) is separated from the base layer (2) by cutting with a geometrically defined or geometrically undefined cutting edge.

4. Method according to any one of claims 1 to 3, **characterized in that** the top layer (3) and/or the bottom layer (4) are separated from the base layer (2) by a cutting method.

5. Method according to any one of claims 2 to 4, **characterized in that** the top layer (3) and the bottom layer (4) are separated from the base layer (2) in a single operation.

6. Method according to any one of claims 2 to 5, **characterized in that** the top layer (3) and the bottom layer (4) are fed to separate material paths.

7. Method according to any one of claims 1 to 6, **characterized in that** the panels (1, 1a) have an identification mark (14, 15) on their underside, wherein the identification mark (14, 15) is read in order to compare information about the type of panel with a database which provides method parameters for the separation method.

## Revendications

1. Procédé de recyclage d'un panneau multicouche (1a, 1a), dans lequel le panneau (1, 1a) présente une couche porteuse (2) en un matériau dérivé du bois et une couche de recouvrement (3), dans lequel la couche de recouvrement (3) est séparée de la couche porteuse (2) par un procédé de séparation mécanique, dans lequel la forme de la couche porteuse (2) est maintenue et est amenée à un processus de recyclage pour le recyclage de la couche porteuse (2), **caractérisé en ce que** le panneau (1, 1a) présente en option, à l'opposé de la couche de recouvrement (3), une couche inférieure (4) qui est reliée à la couche porteuse (2), dans lequel le panneau (1, 1a) est séparé en bandes longitudinales (20) avant la séparation de la couche de recouvrement (3) et/ou de la couche inférieure (4), dans lequel les bandes (20) sont séparées de la couche de recouvrement (3) et/ou de la couche inférieure (4).

2. Procédé selon la revendication 1, **caractérisé en ce que** la couche inférieure (4) est séparée de la couche porteuse (2) par un procédé de séparation mécanique.

3. Procédé selon la revendication 1 ou 2, **caractérisé en ce que** la couche porteuse (3) et/ou la couche inférieure (4) est séparée de la couche porteuse (2) par enlèvement de copeaux avec une coupe déterminée géométriquement ou non déterminée géométriquement.

4. Procédé selon l'une quelconque des revendications 1 à 3, **caractérisé en ce que** la couche de recouvrement (3) et/ou la couche inférieure (4) est séparée de la couche porteuse (2) par un procédé de coupe.

5. Procédé selon l'une quelconque des revendications 2 à 4, **caractérisé en ce que** la couche de recouvrement (3) et la couche inférieure (4) sont séparées de la couche porteuse (2) en une seule opération.

6. Procédé selon l'une quelconque des revendications 2 à 5, **caractérisé en ce que** la couche de recouvrement (3) et la couche inférieure (4) sont alimentées à voies de matériau séparées.

7. Procédé selon l'une quelconque des revendications 1 à 6, **caractérisé en ce que** les panneaux (1, 1a) présentent un marquage (14, 15) au niveau de leur côté inférieur, dans lequel le marquage (14, 15) est lu afin de comparer une information relative au type de panneau avec une base de données qui fournit des paramètres de procédé pour le procédé de séparation.
